# EUROPEAN PATENT APPLICATION

(11) **EP 4 564 554 A1**
(43) Date of publication of application: **04.06.2025**
(21) Application number: 24179636.6
(22) Date of filing: 03.06.2024
(51) Int. Cl.: H01M 50/209, H01M 50/507

(54) **BATTERY MODULE AND BATTERY PACK INCLUDING THE SAME**

(30) Priority: 01.12.2023 KR 20230172415
(71) Applicant: Samsung SDI Co., Ltd., Yongin-si, Gyeonggi-do 17084 (KR)
(72) Inventor: Lee, Kil Seok, 16678 Suwon-si, Gyeonggi-do (KR)
(74) Representative: Gulde & Partner

(57) **Abstract**

The present invention relates to a battery module and a battery pack including the same, and the battery module includes a battery cell, a side plate which faces a side surface of the battery cell and includes a protruding portion protruding in a width direction of the battery cell, a cell terminal protruding from the battery cell toward the side plate, a busbar holder coupled to the side plate and disposed between the side plate and the battery cell, and a busbar supported by the busbar holder and connected to the cell terminal.

## Description

### BACKGROUND

### 1. Field

The present invention relates to a battery module and a battery pack including the same.

### 2. Description of the Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells are electrically connected to each other to form a battery module in order to enhance output and/or capacity of the batteries.

The above information disclosed in this Background section is provided for enhancement of understanding of the background of the present disclosure, and, therefore, it may contain information that does not constitute related (or prior) art.

### SUMMARY

The present invention is directed to providing a battery module capable of improving space utilization of a battery pack and a battery pack including the same.

These and other aspects and features of the present disclosure will be described in or will be apparent from the following description of some embodiments of the present disclosure.

According to an aspect of the present invention, there is provided a battery module including a battery cell, a side plate which faces a side surface of the battery cell and includes a protruding portion protruding in a width direction of the battery cell, a cell terminal protruding from the battery cell toward the side plate, a busbar holder coupled to the side plate and disposed between the side plate and the battery cell, and a busbar supported by the busbar holder and connected to the cell terminal. The width may refer to a distance between two side surfaces of a battery cell. The width direction may refer to a direction toward the opposite side surface.

The side plate, the cell terminal, and the busbar holder may be provided as a pair of side plates, a pair of cell terminals, and a pair of busbar holders, respectively, wherein the pair of side plates, the pair of cell terminals, and the pair of busbar holders may each be symmetrically disposed at both sides of the battery cell.

The protruding portion may include a first opening, and the busbar holder may include a second opening communicating with the first opening.

The busbar may cover the second opening.

The battery module may further include a flexible substrate included in the busbar holder and electrically connected to the busbar.

The battery module may further include an end plate facing each of front and rear surfaces of the battery cell.

According to another aspect of the present invention, there is provided a battery pack including a housing, battery modules which are accommodated inside the housing and disposed to be spaced apart from each other in a first direction, a crossbeam which is disposed between the adjacent battery modules, extends in a second direction, and is in contact with a lower side of a side plate, a bracket which is disposed between the adjacent battery modules, extends in the second direction, and is in contact with an upper side of the side plate, and a fixing member which fixes the bracket and the crossbeam to the side plate.

The protruding portion may include a first side body extending from the side plate toward an adjacent side plate and seated on the crossbeam, a second side body which extends from the side plate toward the adjacent side plate and on which the bracket is seated, and a connecting body connecting an end portion of the first side body and an end portion of the second side body and including a first opening.

The crossbeam may include a base frame seated in the housing and a protruding frame which protrudes from the base frame toward the bracket and on which the first side body is seated.

A width of the protruding frame may decrease toward the bracket.

The first side bodies adjacent to a first portion and a second portion may be seated on the first portion and the second portion of the protruding frame.The protruding frame may include a first hole which is formed between the first portion and the second portion and through which the fixing member passes.

The bracket may include a seating plate whose lower surfaces at both sides are seated on the adjacent second side body and which includes a second hole through which the fixing member passes, a pair of first extension plates extending from both sides of the seating plate in a height direction of the battery cell, and a second extension plate which extends from the pair of the first extension plates, covers the seating plate, and includes through holes through which the fixing member passes.

The through holes may be disposed to be spaced apart from each other in a longitudinal direction of the second extension plate.

The fixing member may include a bolt member which passes through the bracket and the crossbeam and is mounted on the bracket and a nut member which is fixed to the crossbeam and to which the bolt member is coupled.

The bolt member may include a head portion seated inside the bracket and a body portion which sequentially passes through the bracket and the crossbeam and is spiral-coupled to the nut member.

The housing may include a container in which the battery module is seated and which includes an opening and a cover which is coupled to the container and covers the opening.

The cover may be bolt-coupled to the bracket.

The battery pack may further include a first cooling plate disposed between the cover and the battery module and a second cooling plate disposed between the container and the battery module.

The first cooling plate may be bolt-coupled to the bracket.

According to an embodiment of the present invention, since a bracket and a crossbeam are disposed on an upper side and a lower side of a protruding portion of an adjacent side plate which protects a side surface of a battery cell at which a cell terminal is located, and a fixing member fixes the bracket and the crossbeam to the side plate, a volume energy density and a weight energy density of the battery pack can be optimized.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating a battery pack according to one embodiment of the present invention;
FIG. 2 is a schematic exploded perspective view illustrating the battery pack according to one embodiment of the present invention;
FIG. 3 is a schematic perspective view illustrating the battery module according to one embodiment of the present invention;
FIG. 4 is a schematic exploded perspective view illustrating the battery module according to one embodiment of the present invention;
FIG. 5 is a schematic perspective view illustrating a structure of the battery pack according to one embodiment of the present invention;
FIG. 6 is a cross-sectional view along line A-A of FIG. 5;
FIG. 7 is a schematic perspective view illustrating a structure of the battery pack according to one embodiment of the present invention; and
FIG. 8 is a schematic exploded perspective view illustrating a structure of the battery pack according to one embodiment of the present invention.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

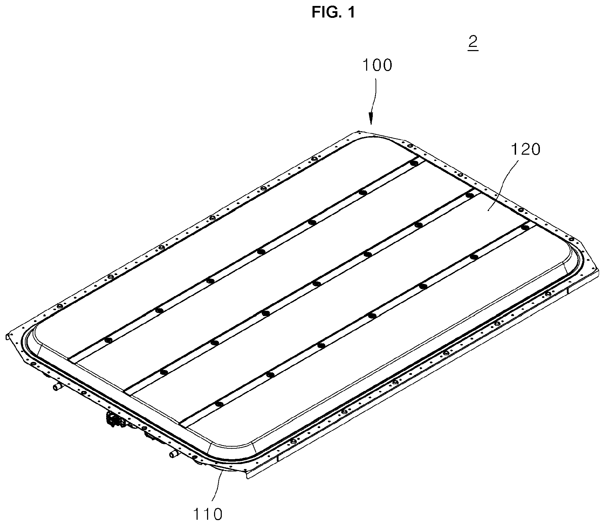

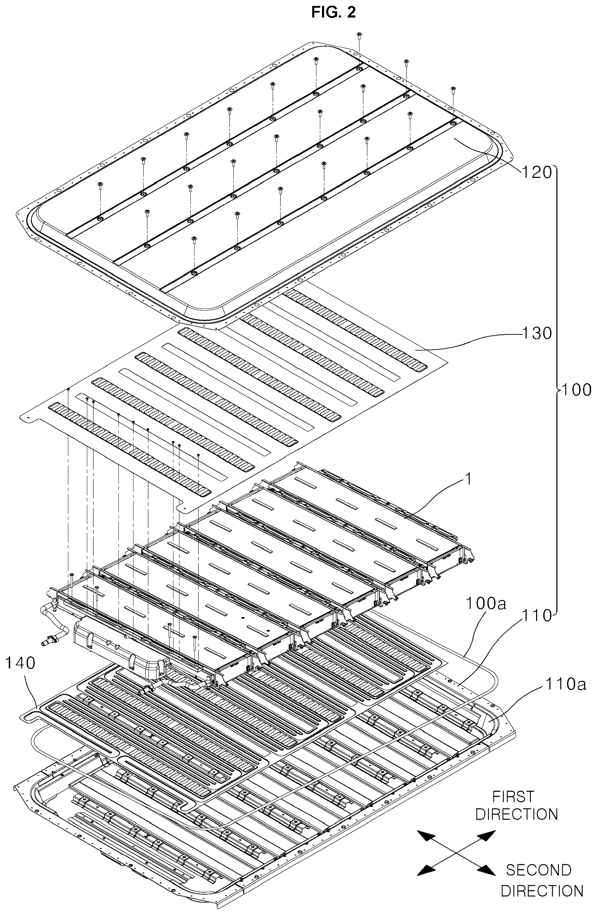

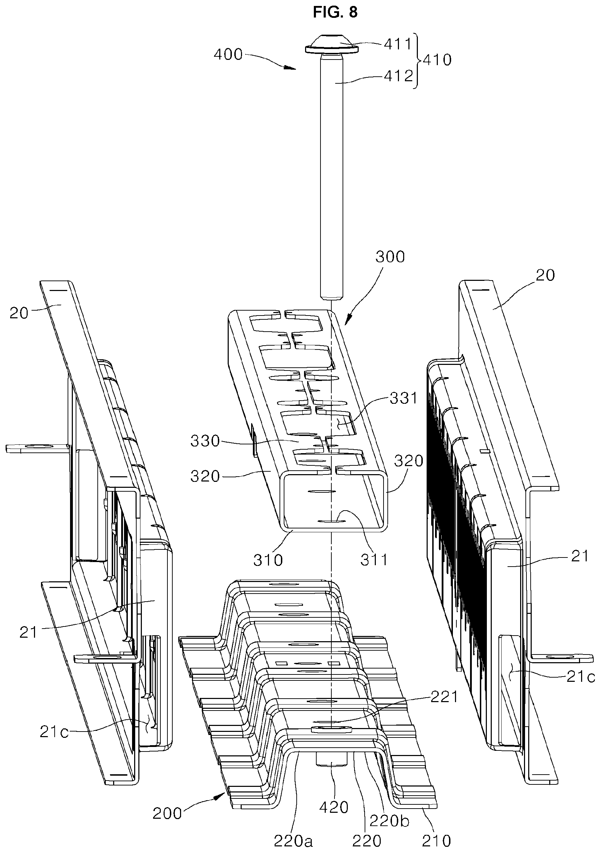

Further, any directions mentioned in the description may refer to directions shown in the drawings if there is no specific definition in the description. FIG. 1 is a schematic perspective view illustrating a battery pack according to one embodiment of the present invention, FIG. 2 is a schematic exploded perspective view illustrating the battery pack according to one embodiment of the present invention, and FIG. 8 is a schematic exploded perspective view illustrating a structure of the battery pack according to one embodiment of the present invention.

Referring to FIGS. 1, 2, and 8, a battery pack 2 according to the embodiment of the present invention includes a housing 100, a battery module 1, a crossbeam 200, a bracket 300, and a fixing member 400.

The battery module 1, the crossbeam 200, the bracket 300, and the fixing member 400 may be accommodated inside the housing 100. The housing 100 may function to protect the battery module 1 from external foreign matter, an impact, and the like. The housing 100 may include a container 110 and a cover 120.

The container 110 may be formed in a box shape in which an inner accommodation space is provided. The container 110 may include an opening 110a. The battery module 1 may be seated inside the container 110 through the opening 110a of the container 110.

The cover 120 may be coupled to the container 110. The cover 120 and the container 110 may be coupled to each other by any one of various methods such as bolting, welding, bonding, fitting, and latching methods in a state in which an edge of the cover 120 and an edge of the container 110 are in contact with each other.

The cover 120 may cover the opening 110a of the container 110. The cover 120 may cover the opening 110a to block foreign matter from being introduced through the opening 110a.

The cover 120 may be formed in a flat plate shape. The cover 120 may be formed in the same shape as the container 110 so that the inner accommodation space is provided when a part of the battery module 1 seated inside the container 110 is exposed to the outside through the opening 110a.

The cover 120 may be fixed to the bracket 300. The cover 120 may be coupled to the bracket 300 by a fastening member such as a bolt.

The housing 100 may further include a sealing member 100a. The sealing member 100a may be interposed between the container 110 and the cover 120. The sealing member 100a may be formed in a ring shape and may include an elastically deformable material. The sealing member 100a may be provided in contact with the edge of the container 110 and the edge of the cover 120.

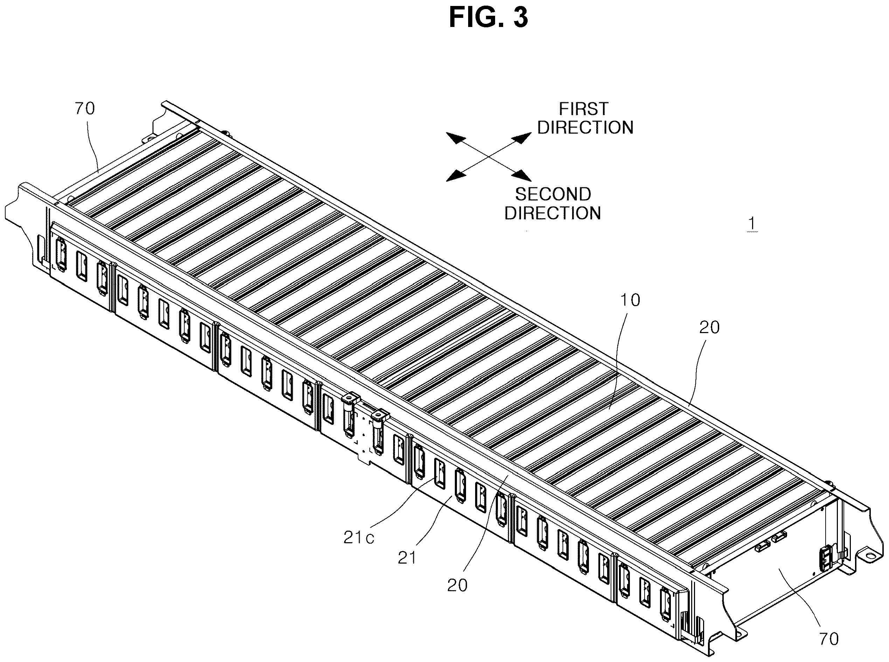

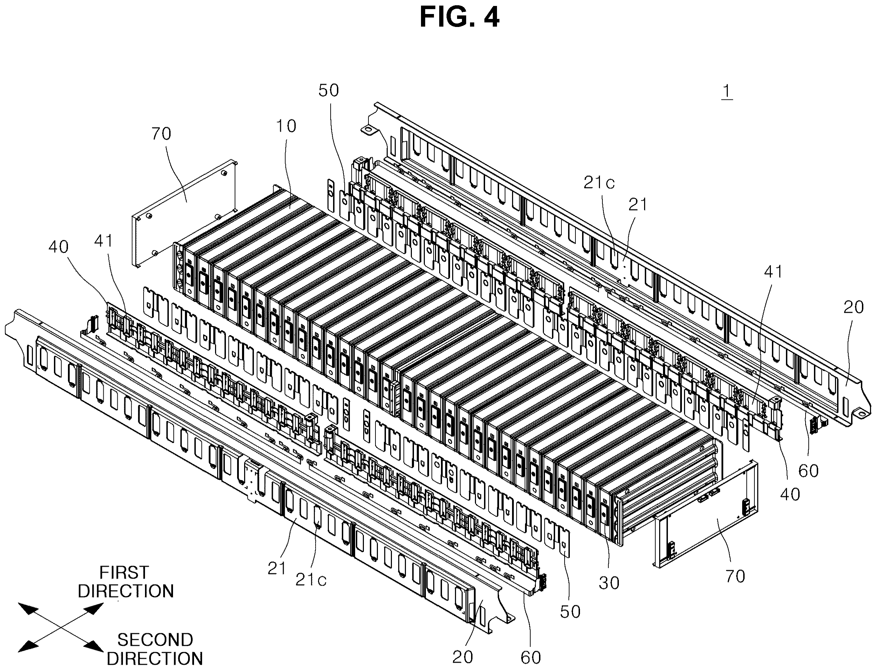

FIG. 3 is a schematic perspective view illustrating the battery module according to one embodiment of the present invention, and FIG. 4 is a schematic exploded perspective view illustrating the battery module according to one embodiment of the present invention.

Referring to FIGS. 3 and 4, the battery module 1 according to the embodiment of the present invention is accommodated inside the housing 100. The battery module 1 may be provided as a plurality of battery modules 1. The battery modules 1 may be disposed to be spaced apart from each other in a first direction. The battery module 1 includes a battery cell 10, a side plate 20, a cell terminal 30, a busbar holder 40, and a busbar 50.

The battery cell 10 functions as a unit structure which stores and supplies power in the battery module 1. The battery cell 10 may be provided as a plurality of battery cells 10. The plurality of battery cells 10 may be arranged in one direction. Front and rear surfaces of the battery cells 10 adjacent to each other may be disposed in parallel to face each other.

The number of the battery cells 10 is not limited to those of FIGS. 3 and 4 and may be variously design-changed according to a size of the battery module 1 and the like.

The side plate 20 may be disposed to surround a side surface of the battery cell 10 and may function to protect the battery cell 10 from external foreign matter, an impact, and the like.

The side plate 20 may be formed in a plate shape facing the side surface of the battery cell 10. A longitudinal direction of the side plate 20 may be an arrangement direction of the plurality of battery cells 10 and may be disposed in parallel to the side surface of the battery cell 10.

The side plate 20 may be disposed to be spaced a preset distance from the side surface of the battery cell 10. Accordingly, a space in which the busbar holder 40 is installed may be provided between the side plate 20 and the side surface of the battery cell 10.

The side plate 20 may be provided as a pair of side plates 20. Inner side surfaces of the pair of side plates 20 may be disposed to individually face both side surfaces of the battery cell 10.

The side plate 20 may include a protruding portion 21. The protruding portion 21 may be formed on an outer side surface of the side plate to protrude in substantially a "c" shape. The protruding portion 21 may protrude in a width direction of the battery cell 10. The protruding portion 21 may be formed in a central portion of the side plate 20 in the longitudinal direction of the side plate 20.

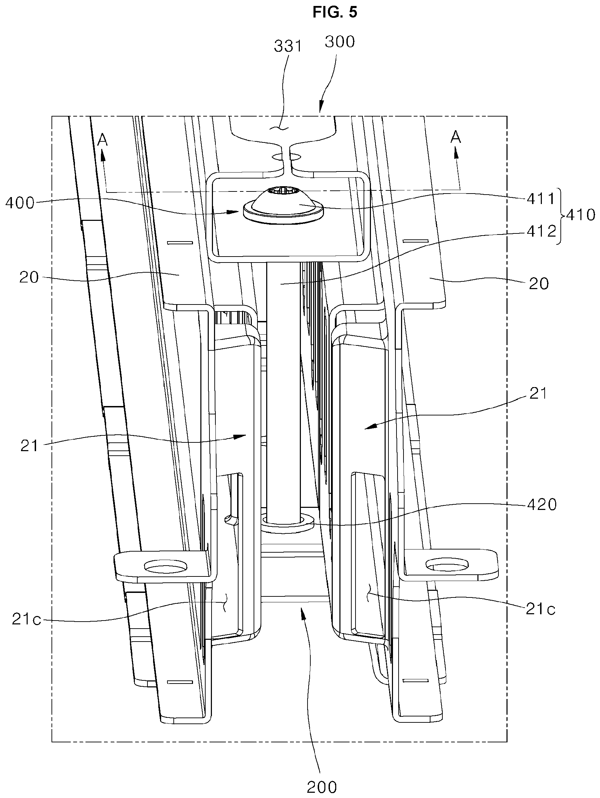

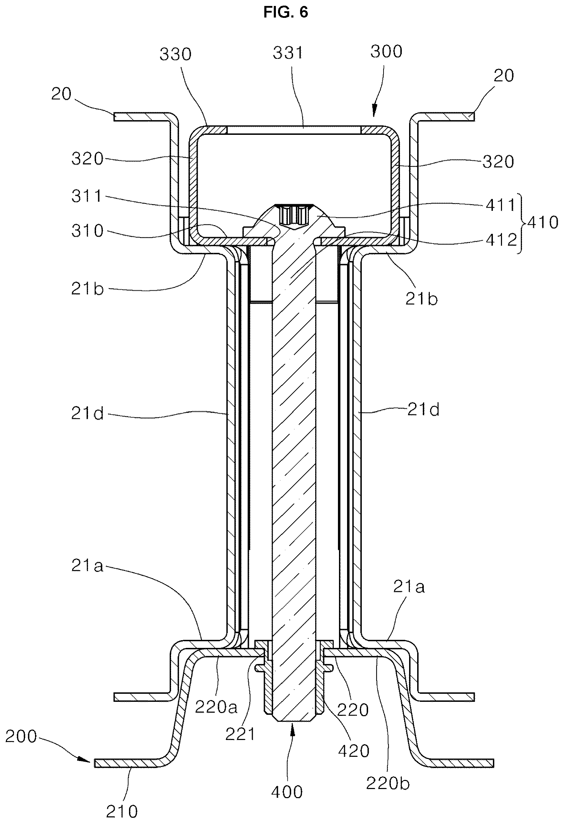

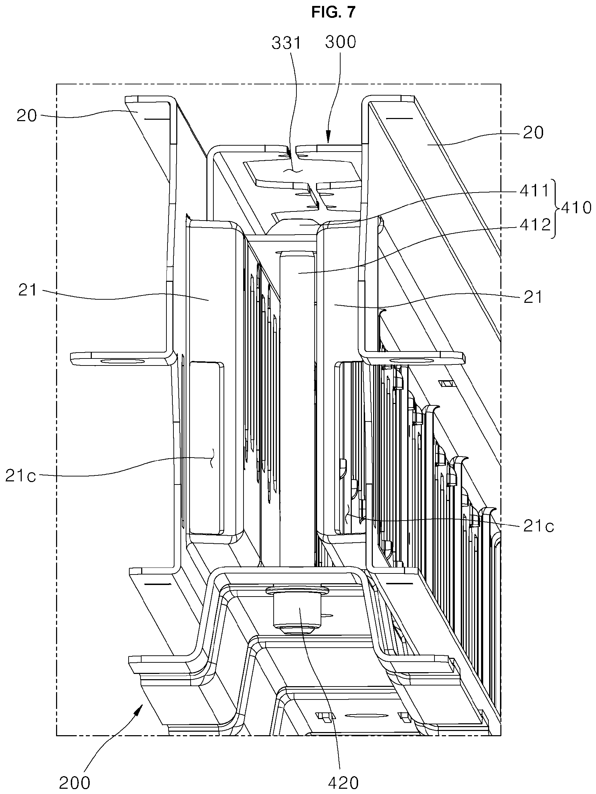

FIG. 5 is a schematic perspective view illustrating a structure of the battery pack according to one embodiment of the present invention, FIG. 6 is a cross-sectional view along line A-A of FIG. 5, and FIG. 7 is a schematic perspective view illustrating a structure of the battery pack according to one embodiment of the present invention.

Referring to FIGS. 1 to 8, the protruding portion 21 may include a first side body 21a, a second side body 21b, and a connecting body 21d.

The first side body 21a may extend from the side plate 20 toward the adjacent side plate 20. The first side body 21a may be seated on the crossbeam 200.

The second side body 21b may be located above the first side body 21a and may be disposed to be spaced apart from the first side body 21a. The second side body 21b may extend from the side plate 20 toward the adjacent side plate 20. The bracket 300 may be seated on the second side body 21b.

The connecting body 21d may be formed in a height direction of the battery cell 10 and may connect an end portion of the first side body 21a and an end portion of the second side body 21b. The end portion of the first side body 21a may a portion of the first side body 21a that is closest to the adjacent battery cell and the end portion of the second side body 21b may a portion of the second side body 21b that is closest to the adjacent battery cell.

The side plate 20 may include a first opening 21c. The first opening 21c may be formed to pass through an outer side surface of the connecting body 21d.

The first opening 21c may be provided as a plurality of first openings 21c disposed to be spaced apart from each other in the longitudinal direction of the side plate 20. The plurality of first openings 21c may be disposed to individually face a second opening 41 of the busbar holder 40.

The cell terminal 30 may protrude from the side surface of the battery cell 10 toward the side plate 20. The cell terminal 30 may be provided as a pair of cell terminals 30. The pair of cell terminals 30 may be symmetrically disposed at both sides of the battery cell 10. The pair of cell terminals 30 may have different polarities.

The pair of cell terminals 30 may protrude from both side surfaces of the battery cell 10 in different directions, and end portions thereof may be disposed to face the pair of side plates 20. The cell terminal 30 may be disposed to face the first opening 21c.

The busbar holder 40 may be disposed between the side plate 20 and the battery cell 10. The busbar holder 40 may be coupled to the side plate 20. The busbar holder 40 may be formed in a substantially flat plate shape. Both surfaces of the busbar holder 40 may be disposed in parallel to and face the side plate 20 and the side surface of the battery cell 10.

The busbar holder 40 may be provided as a pair of busbar holders 40. The pair of busbar holders 40 may be symmetrically disposed at both sides of the battery cell 10. Any one busbar holder 40 of the pair of busbar holders 40 may be disposed between the side plate 20 disposed at one side of the battery cell 10 and the cell terminal 30, and the other busbar holder 40 may be disposed between the side plate 20 disposed at the other side of the battery cell 10 and the cell terminal 30.

The busbar holder 40 may include the second opening 41. The second opening 41 may be formed to pass through an outer side surface of the busbar holder 40. The second opening 41 may be provided as a plurality of second openings 41 disposed to be spaced apart from each other in a longitudinal direction of the busbar holder 40 so that the second openings 41 communicate with the first openings 21c.

The plurality of second openings 41 may be disposed to individually face the plurality of first openings 21c and individually face a plurality of cell terminals 30.

The busbar 50 may be supported by the busbar holder 40. The busbar 50 may be provided on an inner side surface of the busbar holder 40 facing the battery cell 10 and may cover the second opening 41. The busbar 50 may be formed of an electrically conductive material such as copper, aluminum, or nickel.

The busbar 50 may be provided as a plurality of busbars 50. The plurality of busbars 50 may be individually connected to the plurality of cell terminals 30 to connect the plurality of battery cells 10 in series or parallel.

The battery module 1 according to the embodiment of the present invention may further include a flexible substrate 60. The flexible substrate 60 may be included in the busbar holder 40. The flexible substrate 60 may be referred to as a flexible printed circuit assembly (FPCA) or flexible printed circuit board (FPCB).

The flexible substrate 60 may be coupled to the outer side surface of the busbar holder 40. The flexible substrate 60 may be coupled to the busbar holder 40 by any one of various coupling methods such as bolting, welding, bonding, fitting, and latching methods.

The battery module 1 according to the embodiment of the present invention may further include an end plate 70.

The end plate 70 may be disposed to intersect the side plate 20 and face each of the front and rear surfaces of the battery cell 10. More specifically, the end plate 70 may be provided as a pair of end plates 70, and inner side surfaces of the pair of end plates 70 may be disposed to face the front surface of the battery cell 10 disposed at one end of the plurality of battery cells 10 and the rear surface of the battery cell 10 disposed at the other end of the plurality of battery cells 10.

The end plate 70 may be formed in substantially a plate shape. A longitudinal direction of the end plate 70 may be a direction perpendicular to the arrangement direction of the plurality of battery cells 10 and may be parallel to the front and rear surfaces of the battery cell 10.

Both end portions of the end plates 70 may be coupled to the side plates 20. More specifically, both end portions of any one end plate 70 of the pair of end plates 70 may be coupled to one end portions of the pair of side plates 20, and both end portions of the other end plate 70 may be coupled to the other end portions of the pair of side plates 20.

The side plate 20 and the end plate 70 may be coupled to each other by any one of various coupling methods such as bolting, welding, bonding, fitting, and latching methods.

The battery pack 2 according to the embodiment of the present invention may further include a first cooling plate 130 and a second cooling plate 140.

The first cooling plate 130 may be formed in substantially a plate shape. The first cooling plate 130 may be disposed between the cover 120 and the battery module 1.

The first cooling plate 130 may be seated on the battery module 1 and be in contact with an upper surface of the battery module 1. The first cooling plate 130 may cool heat generated by the battery cell 10.

The first cooling plate 130 may be fixed to the bracket 300. The first cooling plate 130 may be coupled to the bracket 300 by a fastening member such as a bolt.

The second cooling plate 140 may be formed in substantially a plate shape. The second cooling plate 140 may be disposed between the container 110 and the battery module 1.

The battery module 1 may be seated on the second cooling plate 140, and the second cooling plate 140 may be in contact with a lower surface of the battery module 1. The second cooling plate 140 may cool the heat generated by the battery cell 10.

The second cooling plate 140 may include a vent part which does not interfere with the crossbeam 200.

The crossbeam 200 is disposed between the adjacent battery modules 1. The crossbeam 200 may be disposed between the plurality of battery modules 1, which are accommodated inside the housing 100 and disposed to be spaced apart from each other in the first direction.

The crossbeam 200 may be formed to extend in a second direction. The crossbeam 200 may be in contact with a lower side of the side plate 20. The crossbeam 200 may support the side plate 20. The crossbeam 200 may include a base frame 210 and a protruding frame 220.

The base frame 210 may be seated in the housing 100. The base frame 210 may be seated on an inner bottom surface of the container 110.

The protruding frame 220 may protrude from the base frame 210 toward the bracket 300. The protruding frame 220 may be formed to protrude from a central portion of the base frame 210 in the height direction of the battery cell 10. The first side body 21a may be seated on the protruding frame 220.

The protruding frame 220 may be formed so that a width of the protruding frame 220 decreases toward the bracket 300. The protruding frame 220 may include a first portion 220a and a second portion 220b. First side bodies 21a adjacent to a first portion 220a and a second portion 220b, respectively, may be seated on the first portion 220a and the second portion 220b of the protruding frame 220.

The protruding frame 220 may include a first hole 221. The first hole 221 may be formed to pass through the protruding frame 220. The first hole 221 may be formed between the first portion 220a and the second portion 220b of the protruding frame 220. The fixing member 400 may pass through the first hole 221.

The bracket 300 is disposed between the adjacent battery modules 1 . The bracket 300 may be disposed between the plurality of battery modules 1, which are accommodated inside the housing 100 and disposed to be spaced apart from each other in the first direction.

The bracket 300 may be formed to extend in the second direction. The bracket 300 may be in contact with an upper side of the side plate 20. The bracket 300 may press the side plate 20. The bracket 300 may include a seating plate 310, a first extension plate 320, and second extension plates 330.

Lower surfaces at both sides of the seating plate 310 may be seated on second side bodies 21b adjacent to the lower surfaces. The seating plate 310 may include a second hole 311. The second hole 311 may be formed to pass through the seating plate 310. The fixing member 400 may pass through the second hole 311.

The first extension plate 320 may be provided as a pair of first extension plates 320. The first extension plates 320 may be formed to extend from both sides of the seating plate 310 in the height direction of the battery cell 10.

The second extension plates 330 may extend from the pair of first extension plates 320 and cover the seating plate 310. The second extension plates 330 may include through holes 331.

The through holes 331 may be formed to pass through the second extension plates 330. The fixing member 400 may pass through each of the through holes 331. The through holes 331 may be disposed to be spaced apart from each other in a longitudinal direction of the second extension plates 330. The cooling plate 130 and the cover 120 may be bolt-coupled to the second extension plate 330.

The fixing member 400 fixes the bracket 300 and the crossbeam 200 to the side plate 20. The fixing member 400 may include a bolt member 410 and a nut member 420.

The bolt member 410 may pass through the bracket 300 and the crossbeam 200 and may be mounted on the bracket 300. The bolt member 410 may include a head portion 411 and a body portion 412. The head portion 411 may be seated inside the bracket 300.

A diameter of the head portion 411 may be smaller than a diameter of the through hole 331 and greater than a diameter of the second hole 311. Accordingly, the head portion 411 may pass through the through hole 331 and may be mounted on the seating plate 310.

The body portion 412 may sequentially pass through the bracket 300 and the crossbeam 200 and may be coupled to the nut member 420. A diameter of the body portion 412 may be smaller than a diameter of the head portion 411 and smaller than a diameter of each of the first hole 221 and the second hole 311.

A thread may be formed on an outer circumferential surface of the body portion 412. Accordingly, the body portion 412 may pass through the bracket 300 and the crossbeam 200 and may be spiral-coupled to the nut member 420.

The nut member 420 may be fixed to the crossbeam 200. The nut member 420 may be inserted into the first hole 221 of the crossbeam 200. The nut member 420 may be press-fitted into the first hole 221. A thread may be formed along an inner circumferential surface of the nut member 420. Accordingly, the nut member 420 may be spiral-coupled to the bolt member 410.

According to an embodiment of the present invention, since a bracket and a crossbeam are disposed on an upper side and a lower side of a protruding portion of an adjacent side plate which protects a side surface of a battery cell at which a cell terminal is located, and a fixing member fixes the bracket and the crossbeam to the side plate, a volume energy density and a weight energy density of the battery pack can be optimized.

However, effects which can be achieved through the present invention are not limited to the above-described effects, and other effects which are not described above will be clearly understood by those skilled in the art from the above description of the present invention.

Although the present invention has been described with reference to embodiments and drawings illustrating aspects thereof, the present invention is not limited thereto. Various modifications and variations can be made by a person skilled in the art to which the present invention belongs within the scope of the present invention and the claims and equivalents thereto.

## Claims

1. A battery module (1) comprising:
a battery cell (10);
a side plate (20) which faces a side surface of the battery cell (10) and includes a protruding portion (21) protruding in a width direction of the battery cell (10);
a cell terminal (30) protruding from the battery cell (10) toward the side plate (20);
a busbar holder (40) coupled to the side plate (20) and disposed between the side plate (20) and the battery cell (10); and
a busbar (50) supported by the busbar holder (40) and connected to the cell terminal (30).

2. The battery module (1) of claim 1, wherein the side plate (20), the cell terminal (30), and the busbar holder (40) are provided as a pair of side plates (20), a pair of cell terminals (30), and a pair of busbar holders (40), respectively,
wherein the pair of side plates (20), the pair of cell terminals (30), and the pair of busbar holders (40) are each symmetrically disposed at both sides of the battery cell (10).

3. The battery module (1) of claim 1 or 2, wherein:
the protruding portion (21) includes a first opening (21c); and
the busbar holder (40) includes a second opening (41) communicating with the first opening (21c).

4. The battery module (1) of claim 3, wherein the busbar (50) covers (120) the second opening (41).

5. The battery module (1) of any of the preceding claims, further comprising a flexible substrate (60) included in the busbar holder (40) and electrically connected to the busbar (50).

6. The battery module (1) of any of the preceding claims, further comprising an end plate (70) facing each of front and rear surfaces of the battery cell (10).

7. A battery pack (2) comprising:
a housing (100);
battery modules (1) which are accommodated inside the housing (100) and disposed to be spaced apart from each other in a first direction and each of which includes the battery module (1) of any one of claims 1 to 6;
a crossbeam (200) which is disposed between battery modules (1) that are adjacent to each other, extends in a second direction, and is in contact with a lower side of a side plate (20);
a bracket (300) which is disposed between the adjacent battery modules (1), extends in the second direction, and is in contact with an upper side of the side plate (20); and
a fixing member (400) which fixes the bracket (300) and the crossbeam (200) to the side plate (20).

8. The battery pack (2) of claim 7, wherein the protruding portion (21) includes:
a first side body (21a) extending from the side plate (20) toward an adjacent side plate (20) and seated on the crossbeam (200);
a second side body (21b) which extends from the side plate (20) toward the adjacent side plate (20) and on which the bracket (300) is seated; and
a connecting body (21d) connecting an end portion of the first side body (21a) and an end portion of the second side body (21b) and including a first opening (21c).

9. The battery pack (2) of claim 7 or 8, wherein the crossbeam (200) includes:
a base frame (210) seated in the housing (100); and
a protruding frame (220) which protrudes from the base frame (210) toward the bracket (300) and on which the first side body (21a) is seated.

10. The battery pack (2) of claim 9, wherein a width of the protruding frame (220) decreases toward the bracket (300).

11. The battery pack (2) of claim 9 or 10, wherein the protruding frame (220) includes a first portion (220a) and a second portion (220b),
the first side body (21a) adjacent to the first portion (220a) and the second side body (21b) adjacent to the second portion (220b), respectively, are seated on the first portion (220a) and the second portion (220b) of the protruding frame (220), respectively.

12. The battery pack (2) of any of claims 8 to 11, wherein the bracket (300) includes:
a seating plate (310) whose lower surfaces at both sides are seated on the adjacent second side body (21b) and which includes a second hole (311) through which the fixing member (400) passes;
a pair of first extension plates (320) extending from both sides of the seating plate (310) in a height direction of the battery cell (10); and
a second extension plate (330) which extends from the pair of the first extension plates (320), covers (120) the seating plate (310), and includes through holes (331) through which the fixing member (400) passes.

13. The battery pack (2) of any of claims 7 to 12, wherein the fixing member (400) includes:
a bolt member (410) which passes through the bracket (300) and the crossbeam (200) and is mounted on the bracket (300); and
a nut member (420) which is fixed to the crossbeam (200) and to which the bolt member (410) is coupled.

14. The battery pack (2) of any of claim s 7 to 13, wherein the housing (100) includes:
a container (110) in which the battery module (1) is seated and which includes an opening (110a); and
a cover (120) which is coupled to the container (110) and covers (120) the opening (110a).

15. The battery pack (2) of claim 14, further comprising:
a first cooling plate (130) disposed between the cover (120) and the battery module (1); and
a second cooling plate (140) disposed between the container (110) and the battery module (1).
